# EUROPEAN PATENT APPLICATION

(11) **EP 1 528 545 A2**
(43) Date of publication of application: **04.05.2005**
(21) Application number: 04020144.4
(22) Date of filing: 25.08.2004
(51) Int. Cl.: G11B 7/125

(54) **Optical disk apparatus and laser control method**

(30) Priority: 30.09.2003 JP 2003342333
(71) Applicant: Kabushiki Kaisha Toshiba, Tokyo 105-8001 (JP)
(72) Inventor: Yamamuro, Mikio Toshiba Corporation, Minato-ku Tokyo 105-8001 (JP)
(74) Representative: Henkel, Feiler & Hänzel

(57) **Abstract**

A front monitor (FM) and I/V conversion circuit (10) detect the emission power of a laser diode (79). A first differential circuit (11) outputs a signal indicating a difference between a read power designating voltage (RPD) and a low emission power detection signal (RMS) sampled by a sample-and-hold circuit (12). A lowpass filter (15) determines a loop band for laser power control, and has a wide band characteristic for a laser control band. A second differential circuit (16) outputs a signal indicating a difference between a write power designating voltage (WPD) and a high emission power detection signal (WMS) sampled by a sample-and-hold circuit (13). An adder (19) adds the output signal of the first differential circuit (11) provided via the lowpass filter (15), to the output signal of the second differential circuit provided via a lowpass filter (17) and switch (18). The resultant summed signal drives the laser diode (79) via a laser driver (20).

## Description

The present invention relates to an optical disk apparatus for recording/reproducing information on/from an optical disk, using a laser beam, and more particularly to a technique for controlling the emission power of a laser.

When information recorded on an optical disk is reproduced, a laser beam of a relatively low power suitable for reproduction is utilized. The optical disk is scanned with the laser beam, whereby marks or pits formed on the optical disk are detected from variations in the intensity of light reflected from the disk, thereby reproducing the information recorded.

When information is recorded on an optical disk, marks indicating the information are formed on the disk along a spiral track thereon by applying a laser beam to the track. The mark is an area in which an optical characteristic, such as reflectance, is varied by the laser beam. Marks are recorded by applying a beam of a higher power than a beam applied for reproduction.

The following schemes have been utilized so far for laser power control in optical disk apparatuses:
(1) Auto power control (APC) having a narrow-band closed loop characteristic is established in accordance with a monitor signal for monitoring the emission power of a laser. During reproduction, a high-frequency signal of, for example, about 300 MHz is superimposed upon a laser-driving signal to reduce noise called RIN. RIN results from, for example, optical resonance between a laser and disk. This noise has a frequency of, for example, several tens of MHz. During recording, the peak points of the monitor signal are detected, and recording power control is performed using the detected peak points.
(2) APC having a wide-band closed loop characteristic is established in accordance with a monitor signal for monitoring the emission power of a laser. During reproduction, RIN is suppressed using the wide pass band to improve the signal-to-noise ratio (S/N) of a reproduced signal. During recording, recording power is controlled using the wide-band closed loop characteristic and referring to recording pulses.
(3) A lowpass filter for detecting a low-frequency component in a signal reproduced by a reproduction beam spot, and a differential amplifier circuit for outputting the difference between the output of the lowpass filter and a reference signal are employed. Using the output of the differential amplifier circuit, the emission power of a recording beam is controlled during recording. (See Jpn. Pat. Appln. KOKAI Publication No. 2-7237)

The scheme (1) using narrow-band APC requires a high-frequency signal to be superimposed during reproduction, therefore radio interference due to the high-frequency signal may well be generated by the apparatus.

The scheme (2) using wide-band APC includes feedback control using recording pulses as reference pulses. Therefore, the higher the rate of recording data to a disk, the wider the band for APC. For example, in the case of high-rate recording, since the frequency of the recording pulses is doubled or more, the signal band for APC must be doubled. It is difficult to construct an apparatus for such wide-band APC, and hence the apparatus is inevitably expensive.

The scheme (3) requires a structure for generating two beams, which increases the cost of the apparatus.

According to an aspect of the invention, there is provided an optical disk apparatus for detecting an emission power of a recording/reproduction laser using a light-receiving element, and controlling emission power of a laser beam based on the detected emission power, comprising: a light emission unit configured to generate recording and reproduction laser beams to an optical disk; an emission power detection unit configured to detect an emission power of the light emission unit and provide an emission power signal; a low emission power detection unit configured to detect a level of the emission power signal during recording in a period in which the light emission unit emits a beam of a low emission power, and to provide a low emission power detection signal; a selection unit configured to select the emission power signal during reproduction, and to select the low emission power detection signal during recording; a first differential circuit which outputs a signal indicating a difference between a signal selected by the selection unit and an input read power designating voltage; a high emission power detecting unit configured to detect a level of the emission power signal during recording in a period in which the light emission unit emits a beam of a high emission power, and to provide a high emission power detection signal; a second differential circuit which outputs a signal indicating a difference between the high emission power detection signal and an input write power designating voltage; a switching unit configured to permit a signal from the second differential circuit to pass therethrough, or to interrupt passing of the signal therethrough, in accordance with a recording data pulse; an adder which adds a signal output from the first differential circuit, to a signal output from the second differential circuit via the switching unit, and provides a summed signal; and a drive unit configured to amplify the summed signal and drive the light emission unit.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram illustrating the configuration of an optical disk recording/reproducing apparatus according to a first embodiment of the invention;
FIG. 2 is a block diagram illustrating the configuration of a laser control circuit 75 employed in the first embodiment;
FIG. 3 is a timing chart useful in explaining recording and reproducing operations;
FIG. 4 is a timing chart useful in explaining the recording operation in more detail; and
FIG. 5 is a block diagram illustrating the configuration of a laser control circuit 75 according to a second embodiment of the invention.

### (First Embodiment)

A first embodiment of the invention will be described in detail with reference to the accompanying drawings.

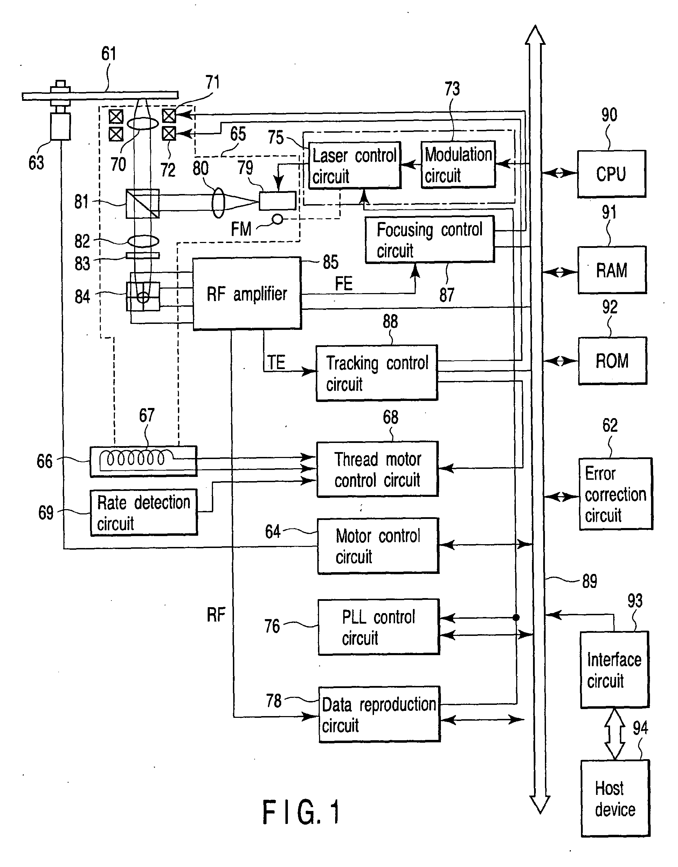

FIG. 1 is a block diagram illustrating the configuration of an optical disk recording/reproducing apparatus according to the first embodiment of the invention.

At the surface of an optical disk 61, a spiral land track and groove track are formed. The optical disk 61 is spun by a spindle motor 63. Recording and reproduction of data on and from the optical disk 61 are performed by an optical pickup (PUH) 65. The optical pickup 65 is coupled to a thread motor 66 via a gear. The thread motor 66 is controlled by a thread motor control circuit 68.

A rate detection circuit 69 is connected to the thread motor control circuit 68. The rate detection circuit 69 detects a rate signal output from the optical pickup 65, and sends it to the thread motor control circuit 68. A permanent magnet (not shown) is provided on the stationary portion of the thread motor 66. When a driving coil 67 is activated by the thread motor control circuit 68, the optical pickup 65 is radially moved over the optical disk 61.

An objective 70 supported by a wire or plate spring (not shown) is incorporated in the optical pickup 65. The objective 70 can be moved in a direction of focusing (along the optical axis of the objective) by driving a driving coil 72, and can be moved in a direction of tracking (in a direction perpendicular to the optical axis of the objective) by driving a driving coil 71.

A modulation circuit 73 subjects, to, for example, 8-14 modulation (EFM), user data sent during recording from a host device 94 via an interface circuit 93, thereby providing EFM data. A laser control circuit 75 sends a write signal to a laser diode 79 during recording of data (during forming of a mark), based on the EFM data from the modulation circuit 73. Further, during reading, the laser control circuit 75 sends, to the laser diode 79, a read signal of a lower level than the write signal. A front monitor FM formed of a photodiode detects the luminous energy (i.e., the emission power) of a light beam generated by the laser diode 79, and supplies a detection current to the laser control circuit 75. Based on the detection current from the front monitor FM, the laser control circuit 75 controls the laser diode 79 so that the laser diode 79 will emit a laser beam with a reproduction laser power or recording laser power set by a CPU 90.

The laser diode 79 emits a laser beam in accordance with a signal sent from the laser control circuit 75. The laser beam emitted from the laser diode 79 is applied to the optical disk 61 via a collimating lens 80, half prism 81 and objective 70. The light reflected from the optical disk 61 is guided to a photodetector 84 via the objective 70, half prism 81, condenser 82 and cylindrical lens 83.

The photodetector 84 is formed of, for example, four photodetector cells, detection signals from which are sent to an RF amplifier 85. The RF amplifier 85 processes the signals from the photodetector cells, and generates a focusing error signal FE indicating the deviation from an exactly-focused state, a tracking error signal TE indicating the deviation of the center of a laser beam spot from the center of the track, and an RF signal as the summed signal of all photodetector cell signals.

The focusing error signal FE is sent to a focusing control circuit 87. Based on the focusing error signal FE, the focusing control circuit 87 generates a focus drive signal. The focus drive signal is sent to the driving coil 71 located in the direction of focusing. As a result, focusing servo processing is performed in which the laser beam is always exactly focused on the recording film of the optical disk 61.

The tracking error signal TE is sent to a tracking control circuit 88. Based on the tracing error signal TE, the tracking control circuit 88 generates a track drive signal. The track drive signal is sent to the driving coil 72 located in the direction of tracking. As a result, tracking servo processing is performed in which the laser beam always traces the track on the optical disk 61.

By virtue of focusing servo processing and tracking servo processing, the summed signal (RF signal) of the signals output from the photodetector cells of the photodetector 84 reflects variations in the light reflected from, for example, pits formed in the track of the optical disk 61 in accordance with to-be-recorded data. The RF signal is sent to a data reproduction circuit 78. From the RF signal, the data reproduction circuit 78 reproduces recorded data in synchronism with a reproduction clock signal from a PLL circuit 76.

When the tracking control circuit 88 controls the objective 70, the thread motor control circuit 68 controls the thread motor 66, i.e., the PUH 65, so that the objective 70 will be positioned in the vicinity of a predetermined position in the PUH 65.

A motor control circuit 64, thread motor control circuit 68, laser control circuit 73, PLL circuit 76, data reproduction circuit 78, focusing control circuit 87, tracking control circuit 88, error correction circuit 62, etc., are controlled by a CPU 90 via a bus 89. The CPU 90 totally controls the recording/reproducing apparatus in accordance with operation commands sent from the host device 94 via the interface circuit 93. The CPU 90 uses a RAM 91 as a work area, and performs predetermined operations in accordance with the control programs stored in a ROM 92 and including a program employed in the present invention. Assume here that the optical disk apparatus has a multiplied-data-rate recording function, i.e., a function for recording data at a rate twice or more the standard rate.

A description will now be given of laser power control according to the invention.

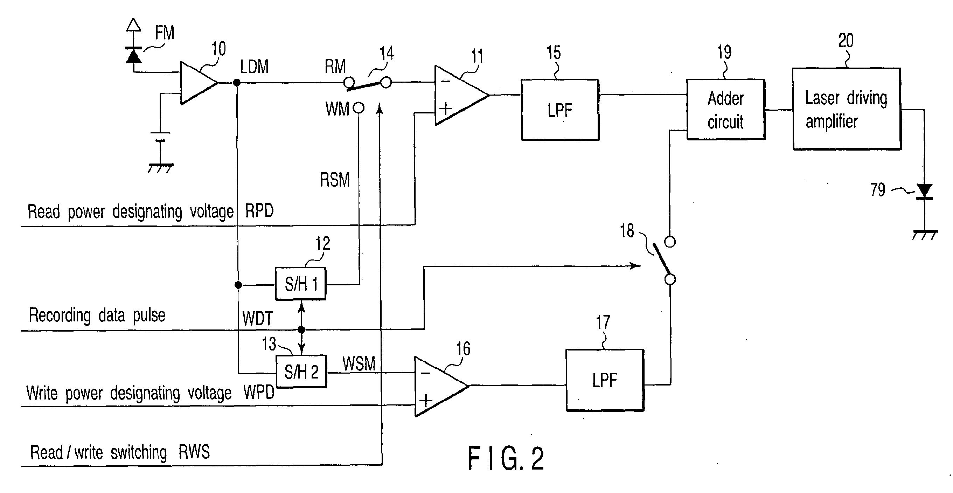

FIG. 2 is a block diagram illustrating the configuration of the laser control circuit 75.

An I/V amplifier 10 converts, into a voltage, a current from the front monitor FM, which indicates the power of the detected laser beam, and outputs an emission power detection signal LDM. A mode switch 14 is switched over to the RM side during reproduction and to the WM side during recording, in accordance with a read/write switching signal RWS from the CPU. A differential circuit 11 compares the emission power detection signal LDM output from the I/V amplifier 10, with a read power designating voltage RPD designated by the CPU 90, and outputs a signal indicating a difference between the detection signal LDM and the designating voltage RPD.

A sample-and-hold (S/H) circuit 12 samples, in a low emission power period during recording, the emission power detection signal LDM output from the I/V amplifier 10. The sampled voltage is compared with the read power designating voltage RPD by the differential circuit 11. A lowpass filter (LPF) 15 connected to the differential circuit 11 can filter the output signal of the differential circuit 11, and can set a loop band for laser power control.

A sample-and-hold (S/H) circuit 13 samples, in a high emission power period during recording, the emission power detection signal LDM output from the I/V amplifier 10. A differential circuit 16 compares a signal WSM indicating the sampled voltage with a recording power designating voltage WPD, and outputs a signal indicating a difference between the signal WSM and the designating voltage WPD. The reading power designating voltage and recording power designating voltage are both acquired by converting digital values designated by the CPU 90 into analog voltages by a digital-to-analog (D/A) converter (not shown).

The lowpass filter (LPF) 17 connected to the differential circuit 16 has a lower pass band than the lowpass filter 15, and filters the output signal of the differential circuit 16. The output signal of the lowpass filter 17 is sent to an adder circuit 19 via a switch 18 which is turned on and off in synchronism with recording data pulses corresponding to to-be-recorded data. The adder circuit 19 adds the output signals of the lowpass filters 15 and 17. The output signal of the adder circuit 19 is sent to a laser driver 20, where it is subjected to voltage-to-current conversion and then amplified. As a result, a desired current is supplied to the laser.

The operation of the laser control circuit 75 will be described in more detail.

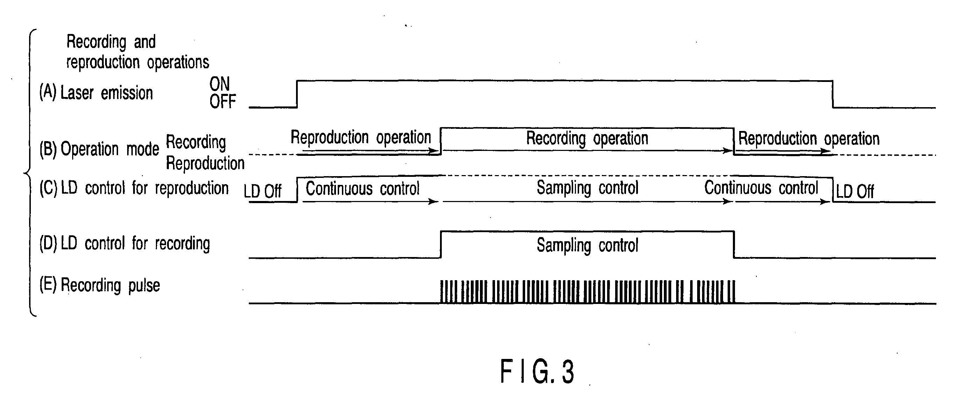

FIG. 3 is a timing chart useful in explaining recording and reproducing operations. (A) of FIG. 3 shows the ON/OFF timing of laser emission, (B) of FIG. 3 the switching timing of recording/reproduction modes, (C) of FIG. 3 the ON/OFF timing of laser diode control during reproduction, (D) of FIG. 3 the ON/OFF timing of laser diode control during recording, and (E) of FIG. 3 recording pulses for recording marks on a disk. The frequency of the recording pulses is, for example, about 100 MHz.

Upon turn-on of the optical disk apparatus, the operation of the laser diode 79 is turned on as shown in (A) of FIG. 3, i.e., the laser diode 79 emits a beam of a read power required to read data recorded on a disk, thereby performing tracking and focusing. During reproduction, the mode switch 14 is connected to the RM side in accordance with the read/write switching signal RWS, thereby directly supplying the emission power monitor signal LDM to the differential circuit 11. As a result, the differential circuit 11 compares the emission power monitor signal LDM with the read power designating voltage RPD designated by the CPU 90, and outputs a signal indicating a difference between the signal LDM and the designating voltage RPD. The output signal of the differential circuit 11 is sent to the laser driver 20 via the lowpass filter 15 and adder circuit 19, thereby driving the laser diode 79.

As a result, emission power of the laser 79 is controlled such that the level of the sampled and held signal LDM is identical to the power designation voltage RPD.

The cutoff frequency of the lowpass filter 15 is set so that the laser control loop band becomes, for example, about a hundred and several tens of MHz. This band is a wide band for a laser control band.

Accordingly, laser noise such as RIN is suppressed by negative feedback loop containing the differential circuit 11 and the wide band lowpass filter 15, with the result that satisfactory reproduction signals can be acquired. The cutoff frequency of a lowpass filter determines the laser control band. In general, in a first order closed loop system, the cutoff frequency multiplied by the DC gain of a lowpass filter serves as the control band for the closed loop. For example, to achieve a control band of 100 MHz with a DC gain 100 (100 times), the cutoff frequency of the lowpass filter is set to 1 MHz.

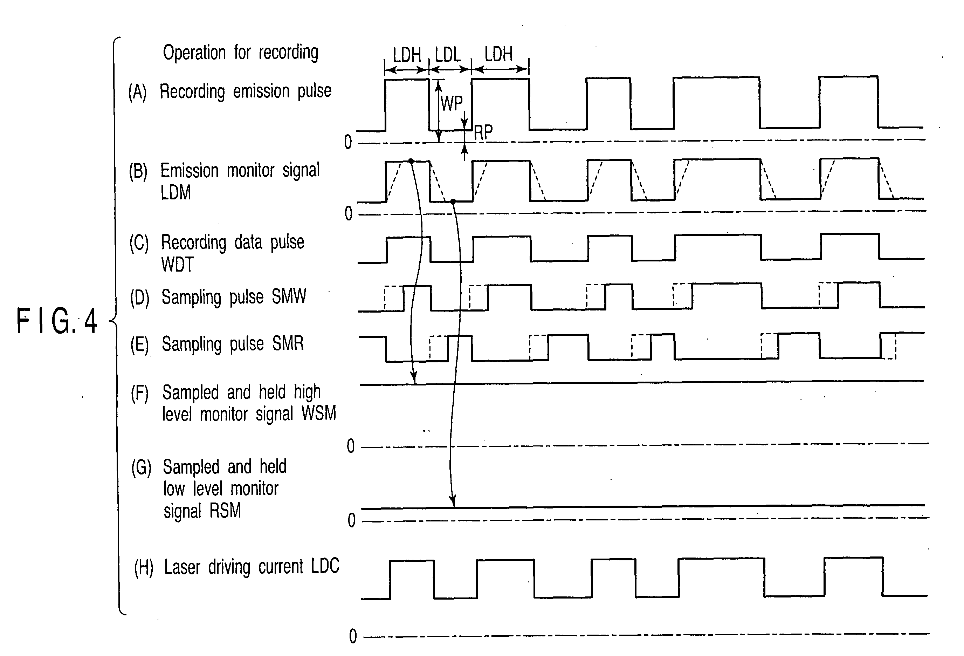

For recording in the embodiment, different types of control is performed between a low emission power period and high emission power period. FIG. 4 is a timing chart useful in explaining the recording operation in more detail. (A) of FIG. 4 shows a recording emission pulse signal generated by the laser diode 79. Specifically, in a high emission power period LDH, the laser diode 79 emits a beam of a write power WP, while in a low emission power period LDL, the laser diode 79 emits a beam of a power level equal to a read power RP, for reading (reproduction), lower than the write power WP. Thus, recording emission pulses are generated. (B) of FIG. 4 shows the monitor signal LDM output from the front monitor FM. (C) of FIG. 4 shows a recording data pulse signal WDT for recording marks on a disk. (D) of FIG. 4 shows a high emission power period sampling pulse signal SMW for sampling the high level of the monitor signal LDM. (E) of FIG. 4 shows a low emission power period sampling pulse signal WMR for sampling the low level of the monitor signal LDM. (F) of FIG. 4 shows a high level monitor signal WSM sampled and held. (G) of FIG. 4 shows a low level monitor signal RSM sampled and held. (H) of FIG. 4 shows a laser driving current LDC.

During recording, the mode switch 14 is connected to the WM side based on the read/write switching signal RWS. Using the recording data pulse signal WDT, the low emission power period sampling pulse signal SMR shown in (E) of FIG. 4 is generated. Since the pulses of the emission monitor signal LDM are normally rounded as indicated by the broken lines in (B) of FIG. 4, low emission power period sampling is performed at the time points, shown in (E) of FIG. 4, at which the pulses. rise a predetermined time later than the falls of the recording data pulses. Based on the sampling pulse signal SMR, the sample-and-hold circuit 12 samples the monitor signal LDM, and generates the signal RSM sampled and held as shown in (G) of FIG. 4. The differential circuit 11 compares the sampled and held signal RSM with the read power designating voltage RPD, and outputs a signal indicating a difference between the signal RSM and the voltage RPD. The output signal of the differential circuit 11 is filtered by the lowpass filter 15 and sent to the adder circuit 19.

Further, using the recording data pulse signal WDT, the recording sampling pulse signal SMW shown in (D) of FIG. 4 is generated. Based on the sampling pulse signal SMW, the sample-and-hold circuit 13 samples the monitor signal LDM, and generates the signal WSM sampled and held as shown in (F) of FIG. 4. The differential circuit 16 compares the sampled and held signal WSM with the write power setting voltage WPD, and outputs a signal indicating a difference between the signal WSM and the voltage WPD. The output signal of the differential circuit 16 is filtered by the lowpass filter 17 having its cutoff frequency set to acquire a relatively low laser control band of, for example, from about several tens to several hundreds of kHz. The switch 18 is turned on when the recording data pulse signal WDT is high. Accordingly, the output of the lowpass filter 17 is sent to the adder circuit 19 when the recording data pulse signal WDT is high. The adder circuit 19 adds the output signals of the lowpass filters 15 and 17, and sends the addition result to the laser driver 20. The laser driver 20 subjects the output of the adder circuit 19 to voltage-to-current conversion, thereby generating the current signal as shown in (H) of FIG. 4 to drive the laser diode 79.

As a result, emission power of the laser 79 is controlled such that the level of the sampled and held signal RSM is identical to the power designation voltage RPD in low emission power periods LDL, and the level of the sampled and held signal WSM is identical to the power designation voltage wPD in high emission power periods LDL.

As described above, since during recording, the low level monitor signal RSM and high level monitor signal WSM are individually controlled by the sample-and-hold circuits 12 and 13, stable emission can be realized.

Further, since the lowpass filter 15 is set to acquire a wide laser control band, noise such as RIN does not occur even in the low emission power period LDL during recording, therefore servo signals for focusing or tracking are protected from adverse influence of such noise. This structure can remove or minimize conventional high-frequency component superimposition, which sufficiently prevents occurrence of radio interference.

Furthermore, since laser control does not form a closed loop by virtue of the sample-and-hold circuits, even if twice or more rate recording is performed, it is not necessary to widen the pass band of the lowpass filter in accordance with the data frequency. The cutoff frequency of the lowpass filter 15 is set so that the laser control band becomes 100 to 200 MHz, in consideration of suppression of RIN and data rate during recording.

### (Second Embodiment)

A second embodiment of the invention will be described.

When stable focusing and tracking servo signals can be acquired using a reproduction emission power during recording even if the laser control band is narrow and/or high-frequency superimposition is not performed, the lowpass filter may be set to acquire a narrow laser control band.

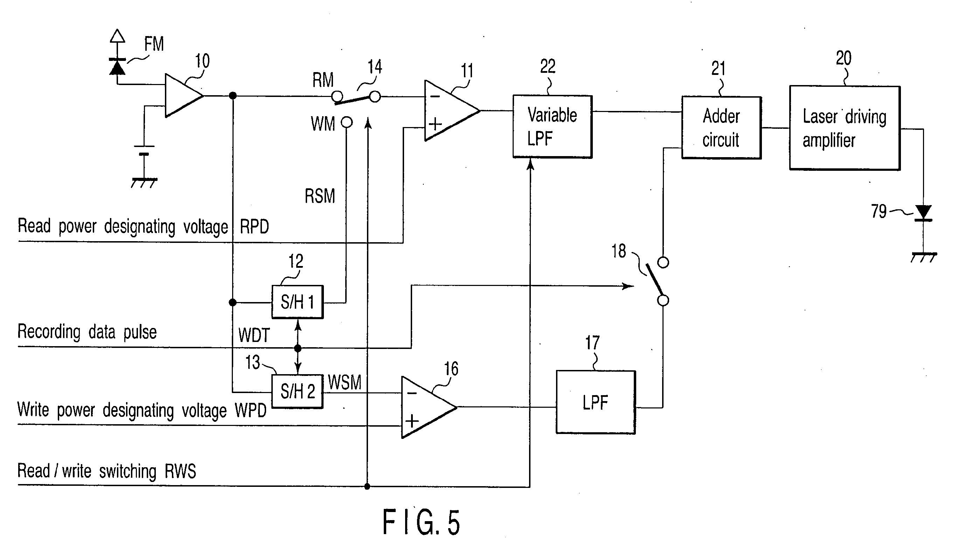

FIG. 5 is a block diagram illustrating the configuration of a laser control circuit according to the second embodiment of the invention. The second embodiment differs from the first embodiment in the structure of the lowpass filter used for the read power detection signal. No description is given of structural elements similar to those employed in the first embodiment.

A variable lowpass filter 22 connected to the differential circuit 11 can vary a loop band for laser power control. The variable lowpass filter 22 can switch its characteristic (cutoff frequency) when the operation mode is shifted from recording to reproduction, or vice versa. Specifically, in the second embodiment, the cutoff frequency of the filter is set so that a wider band loop characteristic is obtained during reproduction, and a narrower band loop characteristic (e.g., several tens of MHz) is obtained during recording.

The cutoff frequency of the variable lowpass filter 22 is set to a high value during reproduction, as in the case of the lowpass filter 15, under the control of the read/write switching signal RWS, thereby providing a wide laser control band. As a result, laser noise such as RIN is sufficiently suppressed, therefore satisfactory reproduction signals can be acquired.

Further, the cutoff frequency of the variable lowpass filter 22 is lower during recording than during reproduction, thereby narrowing the loop band to realize slow responses. This prevents an unstabilized operation due to a disturbance component.

In the above description, the same voltage is used as the read power designation voltage RDP when reading data and when writing data. However, different read power designation voltages RDP may be used. For instance, the'read power designation voltage RDP during data recording may be varied within the range of ∓ 50% of that during data reproduction. If the read power designation voltage RDP during data recording is changed to a low value, the contrast of marks recorded on an optical disk is increased, and the quality of the recorded marks may be enhanced. In this case, however, focusing or tracking servo signal may be destabilized. On the other hand, if the read power designation voltage RDP during data recording is changed to a high value, the servo signal may be stabilized, although the contrast of marks recorded on an optical disk is decreased. In light of this, the read power designation voltage RDP during data recording is set to an optimal value determined experimentally, for example.

An apparatus and/or method according to the present invention is not limited to the above-described embodiments. Further, the present invention includes apparatuses and methods which are obtained by appropriately combining the structural elements, functions, method steps or features employed in the embodiments.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An optical disk apparatus for detecting an emission power of a recording and reproduction laser using a light-receiving element, and controlling emission power of a laser beam based on the detected emission power, **characterized by** comprising:
a light emission unit (79) configured to generate recording and reproduction laser beams to an optical disk;
an emission power detection unit (10) configured to detect an emission power of the light emission unit and provide an emission power signal;
a low emission power detection unit (12) configured to detect a level of the emission power signal during recording in a period in which the light emission unit emits a beam of a low emission power, and to provide a low emission power detection signal;
a selection unit (14) configured to select the emission power signal during reproduction, and to select the low emission power detection signal during recording;
a first differential circuit (11) which outputs a signal indicating a difference between a signal selected by the selection unit and an input read power designating voltage;
a high emission power detecting unit (13) configured to detect a level of the emission power signal during recording in a period in which the light emission unit emits a beam of a high emission power, and to provide a high emission power detection signal;
a second differential circuit (16) which outputs a signal indicating a difference between the high emission power detection signal and an input write power designating voltage;
a switching unit (18) configured to permit a signal from the second differential circuit (16) to pass therethrough, or to interrupt passing of the signal therethrough, in accordance with a recording data pulse;
an adder (19) which adds a signal output from the first differential circuit (11), to a signal output from the second differential circuit (16) via the switching unit (18), and provides a summed signal; and
a drive unit (20) configured to amplify the summed signal and drive the light emission unit (79).

2. The optical disk apparatus according to claim 1, **characterized by** further comprising:
a first lowpass filter (15) which filters a signal output from the first differential circuit (11), and provides the filtered signal to the adder (19), the first lowpass filter (15) determining an emission power control loop band for the laser beam;
a second lowpass filter (17) which filters a signal output from the second differential circuit (16), and provides the filtered signal to the switching unit (18), the second lowpass filter (17) having a lower pass band than the first lowpass filter;

3. The optical disk apparatus according to claim 2, **characterized in that** the first lowpass filter (15) has a cutoff frequency set to a value which makes the emission power control loop band for the laser beam fall within a range of 100 to 200 MHz.

4. The optical disk apparatus according to claim 2, **characterized in that** the first lowpass filter is a variable lowpass filter (22) having a cutoff frequency switched in accordance with a read/write switching signal, the cutoff frequency being set, during reproduction, to a value which makes the emission power control loop band for the laser beam fall within a range of 100 to 200 MHz, the cutoff frequency being set, during recording, to a value which makes the emission power control loop band for the laser beam narrower than during reproduction.

5. A method of detecting an emission power of a recording and reproduction semiconductor laser (79) using a light-receiving element, and controlling emission power of the semiconductor laser (79) based on the detected emission power, **characterized by** comprising:
detecting the emission power of the semiconductor laser (79) and providing an emission power signal;
detecting a level of the emission power signal during recording in a period in which the semiconductor laser (79) emits a beam of a low emission power, and providing a low emission power detection signal;
selecting the emission power signal during reproduction, and selecting the low emission power detection signal during recording;
providing a signal indicating difference between the low emission power detection signal and an input read power designating voltage, using a first differential circuit (11);
filtering a signal output from the first differential circuit (11), using a first lowpass filter (15) which determines an emission power control loop band for the semiconductor laser;
detecting a level of the emission power signal during recording in a period in which the semiconductor laser (79) emits a beam of a high emission power, and outputting a high emission power detection signal;
providing a signal indicating difference between the high emission power detection signal and an input write power designating voltage, using a second differential circuit (16);
filtering a signal output from the second differential circuit (16), using a second lowpass filter (17) having a lower pass band than the first lowpass filter (15);
permitting a signal from the second lowpass filter (17) to pass therethrough, or interrupting passing of the signal therethrough, in accordance with a recording data pulse, using a switching circuit (18);
adding a signal output from the first lowpass filter (15), to a signal output from the second lowpass filter (17) via the switching circuit (18), and providing a summed signal; and
driving the semiconductor laser (79) based on the summed signal.
